# EUROPÄISCHE PATENTANMELDUNG

(11) **EP 1 721 877 A1**
(43) Veröffentlichungstag der Anmeldung: **15.11.2006**
(21) Anmeldenummer: 05103897.4
(22) Anmeldetag: 10.05.2005
(51) Int. Cl.: C04B 33/24, C04B 33/20

(54) **Verfahren zur Rezyklierung von Porzellanpressmasse**

(71) Anmelder: Technische Universität Clausthal, 38678 Clausthal-Zellerfeld (DE); Imerys Tableware Deutschland GmbH, 95100 Selb (DE); Porzellanfabrik Weiden Gebr. Bauscher (BHS), 92637 Weiden (DE); Rosenthal AG, 95100 Selb (DE)
(72) Erfinder: Bertram, Andre, Dr., 38678, Clauthal-Zellerfeld (DE); Heinrich, Jürgen, Prof. Dr., 38678, Clausthal-Zellerfeld (DE); Müller-Zell, Axel, Dr., 95100, Selb (DE); Krebs, Kurt, 95615, Marktredwitz (DE); Preissinger, Dietmar, 95473, Creussen (DE)
(74) Vertreter: Taruttis, Stefan Georg

(57) **Zusammenfassung**

Die vorliegende Erfindung betrifft ein Herstellungsverfahren für Geschirrkeramik, bei dem Pressrückstände rezykliert werden können. Das erfindungsgemäße Verfahren wird durch Pressmassen ermöglicht, die einen gegenüber herkömmlichen Pressmassen verringerten Gehalt an organischen Bindemitteln wie Polyvinyalkohol (PVA) haben. Das organische Bindemittel wird erfindungsgemäß teilweise oder vollständig durch Polyphosphate ersetzt.

## Beschreibung

Die vorliegende Erfindung betrifft ein Verfahren zum Rezyklieren von Pressrückständen bei der Porzellanherstellung, sowie Porzellanpressmassen, die für das Rezyklieren von Pressrückständen geeignet sind.

Das Rezyklieren von Pressrückständen wird erfindungsgemäß dadurch ermöglicht, dass neue Pressmassen bereitgestellt werden, die einen verringerten Gehalt bzw. keine organischen Bindemittel enthalten, die bisher ein Rezyklieren von Pressrückständen unmöglich gemacht haben. Erfindungsgemäß werden die bisher für die Herstellung von Geschirrkeramik unverzichtbaren organischen Bindemittel, beispielsweise Polyvinyalkohol (PVA), durch ein neues Bindemittel ersetzt, was ein Rezyklieren von Pressrückständen erlaubt.

Weiterhin stellt die vorliegende Erfmdung eine Pressmasse für Geschirrkeramik, beispielsweise Porzellan, bereit, die aufgrund ihres verminderten bzw. fehlenden Gehalts an organischen Bindemitteln und ihres Gehalts an dem neuen Bindemittel geeignet für das Rezyklieren von Pressrückständen ist.

Weiterhin stellt die vorliegende Erfindung ein Verfahren zur Herstellung von Formteilen aus der erfindungsgemäßen Pressmasse bereit, die vollständig aus Pressrückständen bestehen oder einen Anteil rezyklierter Pressrückstände enthalten kann.

Insbesondere bezieht sich die vorliegende Erfmdung auf das Rezyklieren von Porzellanpressmassen, die in der Trockenpressung als Formgebungsverfahren zur Herstellung von Porzellan-Flachgeschirr eingesetzt werden. Bei der Trockenpressung wird ein durch Sprühtrocknung hergestelltes, gut rieselfähiges Pressgranulat eingesetzt. Zur Einstellung geeigneter Festigkeitswerte von Presslingen während der Herstellung, z.B. für eine ausreichende Grünfestigkeit, sind bisher organische Additive wie Polyvinylalkohol, Polysaccharide und Polyacrylate als Bindemittel in der Pressmasse enthalten.

### Stand der Technik

Die DE 4 033 730 A1 beschreibt die Verwendung von doppelschichtigen Hydroxiden II- und III-wertiger Metallionen als Verflüssigungsmittel für keramische Massen, die zum Schlickergießen eingesetzt werden. Als bekannt wird beschrieben, dass Verflüssigungsmittel für keramische Massen dadurch verflüssigend wirken, dass durch Ionentausch ihrer Natriumionen gegen Calcium- und Magnesiumionen des Tons oder Kaolins deren Bindungskräfte untereinander reduziert werden. Die Verflüssigungsmittel bilden mit den zweiwertigen Calcium- und Magnesiumionen schwerlösliche Salze. Als Beispiele für Verflüssigungsmittel beim Schlickergießen werden Soda, Natriumoxalat, Natriumpyrophosphat, Natriumpolyphosphat und/oder Wasserglas, einzeln oder in Kombination miteinander aufgeführt.

Beim Zusetzen von Verflüssigungsmittel werden üblicherweise Anteile von 0,01 - 0,2 Gew.-%, bevorzugt 0,1 Gew.-% erreicht.

Die DE 3 105 534 C2 beschreibt ein Verfahren zur Herstellung von Formteilen, die bei hohen Temperaturen eine hohe mechanische Stabilität haben. Bei diesem Verfahren werden aufgeschlossene keramische Fasern, die einen Anteil einer gebrannten Faserkörnung enthalten können, sowie anderen Feuerfestzusätzen und Ton, wahlweise Aluminiumoxid, Siliciumdioxid, Aluminiumhydroxid, Magnesiumdioxid, Titandioxid oder Chromoxid, mit einem Phosphatbindemittel, wahlweise organischem Bindemittel versetzt. Diese faserhaltige Feuerfestmischung wird gepresst, getrocknet und getempert oder gebrannt. Als phosphathaltige Bindemittel werden Borphosphat, Aluminiumphosphat oder Natriumpolyphosphat mit einem Polymerisationsgrad von 4 bis 10 angegeben; organische Bindemittel sind Stärke, Sulfitablauge, Melasse und bevorzugt Methylcellulose.

Bevorzugte Additive, die als Bindemittel eingesetzt werden, sind Polyvinylalkohole (PVA), die zu hohen Grünfestigkeiten der gepressten Grünkörper fähren. Ebenso wie Cellulosederivate (Carboxymethylcellulose, Methylcellulose, Hydroxyethylcellulose) ist PVA gut wasserlöslich. Weitere bekannte organische Additive sind Polysaccharide und makromolekulare Kohlenhydrate, die in Wasser schwer- oder unlöslich sind. Weiterhin werden Polyacrylate als Dispersionsbinder eingesetzt, sowie deren Acrylsäureester oder -amide und Vinylacetat-Ethylen-Copolymerisate.

Das Rezyklieren von Pressrückständen zu dem Schlicker, der zu Pressgranulat sprühgetrocknet wird, führt zu unkontrollierbaren rheologischen Veränderungen des Schlickers, insbesondere zu dessen Überverflüssigung. Dies wird auf die Zersetzung der organischen Bindemittel während der Sprühtrocknung zurückgeführt, die bei Temperaturen von ca. 180 °C stattfindet. Als Konsequenz werden bisher Pressrückstände solcher Porzellanpressmassen als Sondermüll deponiert, da weder ein Rezyklieren in den ursprünglichen Schlicker, noch ein Rezyklieren für anderweitige Produkte möglich ist.

Auch zersetzen sich die organischen Bindemittel beim Porzellanbrand im Bereich von 180 °C bis 550 °C stufenweise, wobei gasförmige Zersetzungsprodukte, beispielsweise Kohlenwasserstoffe entstehen. Derartige Zersetzungsprodukte fähren zu einem erhöhten Poreninnendruck und zu Spannungen, die die Festigkeit des Gefüges vermindern. Dies führt bei der Produktion häufig zu Glührissen. Weiterhin führt das Ausbrennen von organischen Additiven zu einem Festigkeitsabfall während des Porzellanbrands im Bereich zwischen 400 °C und 550 °C, so dass die erforderliche Formstabilität nicht immer gewährleistet ist.

Bekannte anorganische Additive, die als Bindemittel verwendet werden, sind Wassergläser (Alkalisilicate) oder Phosphate, beispielsweise Monoaluminiumphosphat, das als anorganisches Bindemittel für Feuerfestprodukte eingesetzt wird. Dabei sind die Wirkungen von Bindemitteln nicht ohne weiteres von Feuerfestprodukten auf Geschirrkeramik zu übertragen, da sich Feuerfestprodukte durch ihren höheren Anteil an Aluminiumoxid wesentlich von Geschirrkeramikmassen unterscheiden.

Bisher ist keine Pressmasse für Geschirrkeramik, beispielsweise für Porzellan, erhältlich, die nicht-organische Bindemittel enthält. Kommerziell eingesetzte Pressmassen für Porzellan enthalten immer ausschließlich organische Bindemittel.

Bartusch (Industrie-Forum cfi/Ber DKG 70, Nr. 7, Seite 326 - 330 (1993)) beschreibt die Auswirkungen eines höheren Pressdruckes beim isostatischen Verpressen von Sprühgranulaten. Zur Untersuchung der Verteilung von Bindemitteln in sprühgetrockneten Granalien wurde ein Schlicker mit Natriumpolyphosphat als Verflüssiger sprühgetrocknet. Anschließend wurde die Verteilung von Natrium und Phosphor über den Radius der Granalien als uneinheitlich bestimmt. Bei einem Vergleich anorganischer Zusätze konnte gezeigt werden, dass Phosphate zu einer geringeren Festigkeitserhöhung während des Glühbrennens als Disilicate und Trisilicate fähren, wobei als besonders vorteilhaft ein Natronwasserglas angegeben wird, das ein Natriumdisilicat mit etwa 20% Phosphonat ist.

Beim bekannten Stand der Technik werden im Unterschied zur Verwendung von Monoaluminiumphosphat bei Feuerfestprodukten bei Porzellanpressmassen insbesondere Wassergläser in Kombination mit organischen Additiven als Bindemittel eingesetzt.

### Aufgabe der Erfindung

Angesichts der Unmöglichkeit, Pressrückstände bekannter Geschirrkeramik-, insbesondere Porzellanpressmassen zu rezyklieren, stellt sich der vorliegenden Erfmdung die Aufgabe, eine für die Rezyklierung von Pressrückständen geeignete Pressmasse bereitzustellen. Eine weitere Aufgabe der Erfindung ist die Bereitstellung eines Herstellungsverfahrens für Geschirrkeramik, bei dem Pressrückstände rezykliert werden können.

Bei der Lösung der vorgenannten Aufgaben wird zusätzlich angestrebt, dass die keramischen Pressmassen, die zur Rezyklierung geeignet sind, insbesondere Porzellanpressmassen, eine verminderte Rissbildung beim Brand zeigen, die derzeit auf die Zersetzung organischer Bindemittel bei Brenntemperaturen zurückgeführt werden. Dabei ist es insbesondere erwünscht, eine (Porzellan-) Pressmasse bereitzustellen, mit der eine ausreichende Grünfestigkeit, Trockenbiegefestigkeit und Brandfestigkeit erreicht wird.

### Allgemeine Beschreibung der Erfindung

Die Erfindung löst die oben genannten Aufgaben und stellt ein Verfahren zur Rezyklierung von Pressrückständen keramischer Pressmassen bereit, insbesondere von Geschirrpressmassen zur Herstellung von Vitreous China, Fine China und Porzellan, sowie die für die Rezyklierung geeigneten keramischen Pressmassen.

Es hat sich gezeigt, dass die direkte Rückführung von Pressabfällen herkömmlicher Porzellanpressmassen mit organischen Bindemitteln, beispielsweise PVA, auch in Gießmasssen nicht möglich ist. So hat sich bei der Vorbereitung der vorliegenden Erfindung herausgestellt, dass rückgeführte Porzellanpressmassen mit organischen Bindemitteln nicht zur Herstellung von Gießschlickern eingesetzt werden können, da sie in erhöhtem Maße zu Lufteinschlüssen führen.

Weiterhin haben organische Bindemittel häufig eine derart hohe verflüssigende Wirkung, dass Schlicker, die rückgeführte Porzellanpressmasse mit organischem Bindemittel enthalten, überverflüssigt sind, selbst wenn keine weiteren Verflüssigungsmittel zugesetzt sind. Weiterhin hat sich herausgestellt, dass herkömmliche Gießformen bei Verwendung von Gießschlickern mit einem Gehalt an PVA als organischem Bindemittel, das aus rückgeführter Porzellanpressmasse stammt, in kurzer Zeit unbrauchbar werden und die Formkanäle der Gipsformen verklebt werden.

Hier bietet die Erfindung den Vorteil, dass Pressabfälle erfindungsgemäßer Pressmassen, die kein organisches Bindemittel enthalten, zum Ausgangsmaterial für Pressmasse, Dreh- und/oder Gießmasse rückgeführt werden können.

Die erfindungsgemäße Rezyklierung von Pressrückständen, die beispielsweise bei der Porzellanherstellung durch Pressen sprühgetrockneten Granulats anfallen, wird durch die erfindungsgemäßen Pressmassen ermöglicht, die weiter keinen oder einen reduzierten Gehalt an organischen Bestandteilen, insbesondere an organischen Bindemitteln aufweisen, jedoch einen Gehalt an Polyphosphat. Entsprechend werden auch keramische Pressmassen ohne bzw. mit reduziertem Gehalt an organischen Bindemitteln, die Polyphosphat enthalten, zur Verwendung in einem Herstellungsverfahren für Geschirrkeramik bereitgestellt, dessen Pressrückstände rezykliert werden können.

Die erfindungsgemäßen keramischen Pressmassen, insbesondere für Vitreous China, Fine China und Porzellan, weisen keinen oder einen nur geringen Gehalt an organischen Bindemitteln auf, bei denen die Bindemittelwirkung durch Polyphosphat ergänzt bzw. vollständig von Polyphosphat erzeugt wird.

Bei der Ausarbeitung der vorliegenden Erfindung hat sich gezeigt, dass die für die Rezyklierung geeigneten Polyphosphat-haltigen Pressmassen für Geschirrkeramik überdies die erforderlichen Festigkeitseigenschaften, insbesondere hinsichtlich der Grünfestigkeit, Trockenbiegefestigkeit und Brennfestigkeit aufweisen, die für eine industrielle Produktion, beispielsweise für den Stapelbrand von Flachgeschirr, erforderlich sind. Dabei hat sich gezeigt, dass der Gehalt an Polyphosphat, insbesondere Natriumhexametaphosphat, gerade im Temperaturbereich von 400 - 550 °C zu verbesserten Festigkeitseigenschaften führt, als herkömmliche organische Bindemittelsysteme.

Erfmdungsgemäße Pressmassen weisen daher als Bindemittel herkömmliche organische Bindemittel, beispielsweise PVA, in Kombination mit Polyphosphat auf, oder nur Polyphosphat, jedoch kein organisches Bindemittel.

In einem Aspekt stellt die vorliegende Erfindung daher die Verwendung von Polyphosphaten, insbesondere Natriumhexametaphosphat, als Bindemittel für keramische Pressmassen, insbesondere Porzellanpressmassen bereit.

In einer bevorzugten Ausführungsform weisen erfindungsgemäße Pressmassen für Geschirrkeramik, z.B. Porzellanpressmassen, einen höheren Anteil an hochplastischen Bestandteilen als herkömmliche Pressmassen auf, die organische Bindemittel enthalten. Hochplastische Bestandteile sind beispielsweise Kaoline oder Bentonite, bei denen ein höherer Anteil die Verarbeitbarkeit zusätzlich verbessert. In besonders bevorzugter Ausführungsform enthaltenen erfmdungsgemäße Pressmassen für Geschirrkeramik einen höheren Anteil an hochplastischen Bestandteilen, beispielsweise um 0,5 bis 10 Gew.-%, vorzugsweise, 0,5 bis 5 Gew.-% erhöhten Anteil hochplastischen Rohstoffs, beispielsweise an Kaolin, Bentonit und/oder Ton.

### Genaue Beschreibung der Erfindung

Die Erfindung stellt ein Verfahren zur Herstellung von Flachgeschirr, insbesondere Porzellan bereit, bei dem Granulat durch Sprühtrocknen aus Schlicker hergestellt wird und durch Verpressen, beispielsweise isostatisch, zu Presslingen geformt wird. Pressrückstände, die als Überstände bei der Formung entstehen, oder beim späteren Versäubern von Presskanten, werden erfindungsgemäß durch Rückführen in den Schlicker rezykliert, aus dem das zu verpressende Granulat sprühgetrocknet wird.

Das Rezyklieren von Pressrückständen kann erfindungsgemäß kontinuierlich oder satzweise erfolgen, so dass Pressrückstände auch über einen längeren Zeitraum gesammelt und zwischengelagert werden können.

Das durch die Rezyklierung von Pressrückständen entstehende Gemisch des Schlickers aus nicht rezyklierten Bestandteilen und rezyklierter Pressmasse stellt daher ebenfalls einen Aspekt der vorliegenden Erfmdung dar. Pressmassen, die vollständig aus rezyklierten Pressrückständen erfindungsgemäßer Pressmasse bestehen, können nach Sprühtrocknung zu einem Granulat zu Flachgeschirr gepresst werden. Pressmassen, die zu einem Großteil oder vollständig aus rezyklierter Pressmasse bestehen, sind jedoch dahingehend nachteilig, dass sie geringere Schwindungen nach dem Brand haben, als Pressmassen mit keinem oder nur geringem Gehalt rezyklierter Pressmasse. In der Folge weichen bei unveränderten Pressformen die Größen der fertig gebrannten Flachgeschirre von denjenigen ab, die aus herkömmlicher Pressmasse erzeugt wurden. Es ist daher bevorzugt, dass Pressrückstände bei der Rezyklierung nur einen Anteil von maximal 25%, bevorzugter bis zu 20%, noch bevorzugter bis zu 15 oder 10 Gew.-% der gesamten Pressmasse ausmachen, so dass deren überwiegender Anteil nicht aus rezyklierten Pressrückständen besteht, sondern aus Frischmasse.

Polyphosphat ersetzt erfindungsgemäß bei keramischen Pressmassen, insbesondere Porzellanpressmassen, bisher eingesetztes organisches Bindemittel teilweise oder vollständig.

Das Polyphosphat weist einwertige und/oder zweiwertige Gegenionen auf, insbesondere Alkali- und/oder Erdalkaliionen (Na-, K-, Ca-, Mg- Ionen). Beispiele sind Natriumpolyphosphat, insbesondere Tri- bis Heptaphosphate, besonders bevorzugt (Natrium-) Hexametaphosphat, beispielsweise in einer Mischung aus 50 - 80% P₂O₅ und 20 - 50% Na₂O, insbesondere ca. 68% P₂O₅ und ca. 29,5% Na₂O (kommerziell als Budit 6H von cfb, Budenheim, Deutschland erhältlich).

Das erfindungsgemäß als Bindemittel in keramischen Pressmassen eingesetzte (Natrium-) Polyphosphat, insbesondere in Porzellanpressmassen, kann organische Bindemittel, beispielsweise PVA, das je nach Kettenlänge in einem Anteil von 0,6 bis 4 Gew.-% in Porzellanpressmassen eingesetzt wird, teilweise ersetzen. In dieser Ausführungsform wird die Wirkung eines Bindemittels in Porzellanpressmassen durch die Kombination des erfindungsgemäßen (Natrium-)Polyphosphats mit einem organischen Bindemittel, beispielsweise PVA erreicht. So können Bindemittel in Porzellanpressmassen in Kombination mit organischen Bindemitteln eingesetzt werden, z.B. ca. 0,3 Gew.-% PVA und ca. 1,5 Gew.-% Natriumhexametaphosphat.

In dieser Ausführungsform ist der Gehalt an organischen Bindemitteln gegenüber bisherigen herkömmlichen Porzellanpressmassen gesenkt, was dazu führt, dass die Sprühtrocknung zur Granulatherstellung nicht dazu führt, dass rezyklierte Pressmasse die rheologischen Eigenschaften des Schlickers wesentlich verändert und überdies dazu, dass der Anteil an Rissbildung während des Brandes reduziert ist. Die für die Verarbeitung erforderlichen Festigkeiten werden mit der erfmdungsgemäßen Porzellanpressmasse mit einem Anteil an Natriumpolyphosphat in ausreichendem Maße erreicht.

In der bevorzugten Ausführungsform werden keramische Pressmassen, insbesondere Porzellanpressmassen bereitgestellt, deren Pressrückstände zur Rezyklierung geeignet sind, weil sie kein organisches Bindemittel aufweisen, sondern (Natrium-) Polyphosphat wie Tribis Heptaphosphate, beispielsweise Natriumhexametaphosphat, bevorzugt in Kombination mit Na₂O, als Bindemittel enthalten. In dieser Ausführungsform entfällt eine Veränderung der rheologischen Eigenschaften des Schlickers durch Beimischen rezyklierter Pressmasse, die bereits eine thermische Belastung durch die Sprühtrocknung erfahren hat. Daher können in dieser Ausführungsform höhere Anteile von Pressmasseabfällen rezykliert, d.h. dem Schlicker zugesetzt werden, ohne dass eine inakzeptable Veränderung der Schwindung während des Brandes auftritt. Als Konsequenz können bei erfindungsgemäßer Pressmasse, die als Bindemittel ausschließlich Polyphosphat aufweist, jedoch keine organischen Additive, mehr als 10 Gew.-% bis zu 100 Gew.-% rezyklierter Pressmasseabfällen dem Schlicker zugesetzt werden und zu Granulat verarbeitet werden, wobei unabhängig vom Anteil rezyklierter Pressmasseabfälle die Maßhaltigkeit der gebrannten Keramik innerhalb der Toleranz liegt.

Überdies konnte in Vergleichsversuchen gezeigt werden, dass Porzellanpressmassen, die als Bindemittel Polyphosphat, optional mit einem verringerten Anteil an organischen Bindemitteln, vergleichbare Festigkeitswerte während der Verarbeitung aufweisen, wie aus herkömmlichen Pressmassen hergestellte Formlinge mit ausschließlich organischem Bindemittel. Als weiterer Vorteil der erfindungsgemäßen Pressmasse ist die Häufigkeit von Rissen, beispielsweise während des Glühbrandes, gegenüber Pressmassen mit ausschließlich organischem Bindemittel verringert. Neben einem verringerten Ausschuss durch Rissbildung haben erfmdungsgemäße keramische Pressmassen den Vorteil, die Umweltbelastungen durch organische Bindemittel zu verringern bzw. zu vermeiden und überdies den Verbrauch an Rohstoffen und Energie zu verringern.

Die verbesserte Ausnutzung von Rohstoffen und Energie durch erfmdungsgemäße keramische Pressmassen ergibt sich daraus, dass eine Rückführung von keramischen Pressmassen mit Natriumpolyphosphat als Bindemittel, vorzugsweise ohne einen Gehalt an organischen Bindemitteln, in der Produktion möglich ist und überdies der Rissanteil niedriger als mit organischem Bindemittel ist.

Hinsichtlich der Festigkeitswerte vor und während des Porzellanbrands weisen erfindungsgemäße Pressmassen mit Natriumpolyphosphat gegenüber herkömmlichen Porzellanpressmassen mit PVA als Bindemittel den deutlichen Vorteil der größeren Rissfestigkeit im Brand auf, obwohl teilweise eine erniedrigte Grünfestigkeit erfindungsgemäßer Pressmassen bestimmt wurde.

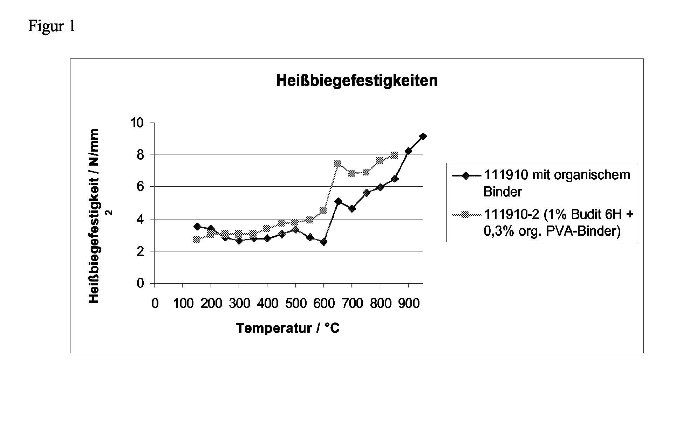

Die Erfmdung wird nun im Detail anhand von Beispielen beschrieben, wobei die Figuren in Bezug genommen werden, in denen
- Figur 1 eine graphische Darstellung der Heißbiegefestigkeiten von Rohlingen aus Porzellanpressmasse mit PVA bzw. Polyphosphat in Kombination mit PVA als Bindemittel ist.

### Beispiel 1: Porzellanpressmasse mit ca. 1,5 Gew.-% Natriumpolyphosphat und organischem Bindemittel im Vergleich

Eine industriell eingesetzte Porzellanpressmasse, nämlich 111910 (Imerys Tableware, Selb, Deutschland) mit einem organischen Bindersystem auf Basis von PVA wurde als Vergleichsmasse eingesetzt. Auf Basis dieser Porzellanpressmasse 111910 wurde eine erfindungsgemäße Porzellanpressmasse mit identischer Zusammensetzung entwickelt, mit der Veränderung, dass als Bindemittel eine Kombination von 1 % Budit 6H (68 Gew.-%, P₂O₅, 29,5% Na₂O) in Kombination mit 0,3 Gew.-% PVA enthalten ist, und ein Zusatz von 0,5 - 5 Gew.-% hochplastischen Rohstoffs, bspw. Kaolin.

Beim Vergleich der Heißbiegefestigkeiten dieser beiden Porzellanpressmassen wird deutlich, dass das erfindungsgemäße Bindemittel im als kritisch angesehenen Bereich von ca. 200 °C bis 650 °C deutlich höhere Heißbiegefestigkeiten gegenüber der Pressmasse 111910 (kein Gehalt an Polyphosphat) ergibt. Die gemessenen Heißbiegefestigkeiten sind in Figur 1 dargestellt.

Auch ein Vergleich der chemischen Zusammensetzung der geglühten Porzellanpressmasse (RFA) zeigt die vielfältigen Einsatzmöglichkeiten der erfindungsgemäßen keramischen Pressmassen, die nachfolgend in Tabelle 1 dargestellt ist:

**Tabelle 1: Chemische Zusammensetzungen in Gew.-%, geglüht, 1000° C (RFA)**

| Analyse | **Pressmasse** | | |
|---|---|---|---|
| | **111910-2 + 1% Budit 6H + 0,3% PVA** | **111910 + 1% Budit 6H + 0,3% PVA** | **111910 0,5 - 1,2 % PVA** |
| SiO₂ | 67,5 | 67,8 | 68,4 |
| P₂O₅ | 0,69 | 0,70 | 0,12 |
| Al₂O₃ | 26,0 | 26,0 | 26,1 |
| TiO₂ | 0,11 | 0,13 | 0,11 |
| Fe₂O₃ | 0,54 | 0,52 | 0,55 |
| MgO | 0,23 | 0,20 | 0,19 |
| CaO | 0,13 | 0,10 | 0,09 |
| BaO | 0,05 | 0,04 | 0,04 |
| Na₂O | 0,45 | 0,45 | 0,21 |
| K₂O | 3,90 | 3,91 | 3,97 |
| Summe | 99,6 | 99,8 | 99,8 |
| GV 1000°C | 7,39 | 7,40 | 7,63 |
| C (LECO) | 0,29 | 0,30 | 0,5 |

Die keramischen Eigenschaften der beiden Porzellanpressmassen sind der nachfolgenden Tabelle 2 dargestellt, die deutlich macht, dass bei einem teilweisen Ersatz des organischen Bindemittels durch das erfindungsgemäße Natriumpolyphosphat ausreichende Grünfestigkeiten und akzeptable Werte für die Schwindung und Durchbiegung bei im übrigen vergleichbaren Eigenschaften erreicht werden, während die Weiße erhöht ist.

**Tabelle 2: Keramische Eigenschaften**

| Parameter | **Pressmasse** | | |
|---|---|---|---|
| | erfindungsgemäß 111910-2+1% Budit 6H + 0,3% PVA | erfindungsgemäß 111910+1% Budit 6H + 0,3% PVA | Vergleich 111910+ PVA als Bindemittel |
| Rohdichte (g/cm³) | 1,79 | 1,81 | 1,78 [min. 1,76] |
| Grünfestigkeit (N/mm²) | 0,92 | 0,74 | Min. 1,10 |
| TBF 110°C (N/mm²) | 5,0 | 3,3 | 5,0 [min 4,0] |
| Schwindung (%) | 10,7 | 10,3 | 10,9 [±0,3] |
| Durchbiegung (mm) | 47 | 62 | 41 [±3] |
| Weiße R460(%) | 71,2 | 70,3 | 70,2 |
| L (Helligkeit) | 87,8 | 87,4 | 87,4 |
| a (+ rot / - grün) | -1,1 | -1,0 | -1,0 |
| b (+ gelb / - blau) | +0,6 | +0,6 | +0,6 |

Die Porzellanpressmassen wurden zu Stäbchen gepresst und über 4 Stunden bei 1400 °C gebrannt.

### Beispiel 2: Festigkeiten und Schwindung von Porzellanpressmassen mit einem Gehalt an Natriumpolyphosphat

Ausgehend von der in Beispiel 1 beschriebenen Porzellanpressmasse 111910, die nur PVA als Bindemittel enthält, wurden unterschiedliche Kombinationen an Natriumpolyphosphat in Kombination mit oder ohne PVA für die Pressmasse 111910 mit Zusatz von 2 - 5 Gew.-% hochplastischem Kaolin verglichen, die nachfolgend mit 111910-2 bezeichnet wird.

Die Porzellanpressmassen wurden entsprechend Beispiel 1 zu Stäbchen gepresst und gebrannt. Die Eigenschaften sind in der nachfolgenden Tabelle 3 zusammengefasst.

**Tabelle 3: Bindemittel PVA im Vergleich mit Natriumpolyphosphat bei Porzellanpressmassen**

| | 111910 (PVA), (Pressdruck 300 bar) | 111910-2 (2% Budit 6H, Pressdruck 300 bar) | 111910-2 (2% Budit 6H, Pressdruck 250 bar) | 111910-2 (2% Budit 6H, Pressdruck 200 bar) |
|---|---|---|---|---|
| Stabfeuchte % | 2,73 | 2,77 | 2,95 | 2,87 |
| Rohdichte g/cm³ | **1,79** | 1,85 | 1,83 | **1,79** |
| Verdichtungsverhältnis | 2,87 | 2,75 | 2,69 | 2,65 |
| Grünfestigkeit N/mm² | **0,93** | **0,7** | **0,62** | **0,46** |
| Standardabweichung | 0,17 | 0,11 | 0,11 | 0,09 |
| Trockenbiegefestigkeit N/mm² | **3,64** | **3,98** | **3,69** | **3,19** |
| Standardabweichung | 0,76 | 0,74 | 0,75 | 0,79 |
| Brennfestigkeit N/mm² | **65,46** | **62,85** | **62,13** | **64,90** |
| Standardabweichung | 5,8 | 3,28 | 2,62 | 3,71 |
| Längenschwindung % | **10,7** | **9,6** | **10,1** | **10,7** |
| Höhenschwindung % | 12,4 | 10,6 | 11,9 | 12,2 |
| Farbmessung | | | | |
| L* | 87,2 | 87,3 | 87,5 | 87,5 |
| a* | -1,0 | -1,0 | -1,0 | -1,0 |
| b* | 0,5 | 0,7 | 0,7 | 0,6 |
| Weiße R 460 % | 69,9 | 70,6 | 70,5 | 70,0 |

Die hier gemessenen Eigenschaften der gebrannten Porzellanpressmassen belegen, dass die für die industrielle Produktion erforderlichen Eigenschaften, die die Porzellanpressmasse 111910 mit herkömmlichem Bindemittel (PVA) aufweist, auch von den erfindungsgemäßen Pressmassen, die ausschließlich Natriumpolyphosphat als Bindemittel enthalten, in einem Maße erreicht werden können, dass für die industrielle Produktion ausreicht, wobei vorteilhafterweise die Schwindungswerte für die erfindungsgemäße keramische Pressmasse so eingestellt bzw. erreicht werden, dass für die Produktion im Wesentlichen unveränderte Pressformen eingesetzt werden können.

### Beispiel 3: Rückführung von Pressmasseabfällen zu Drehmasse

Pressmasseabfälle, die bei der Herstellung von Porzellan-Flachgeschirr anfielen, wurden zu 100% als Drehmasse zur Herstellung von Tassen eingesetzt. Dabei konnten erfindungsgemäße Pressmassen gemäß Beispiel 2, die einen Gehalt an Natriumpolyphosphat aufwiesen, zu 100% zu fehlerfreien Tassen verarbeitet werden. Dabei wurde allerdings festgestellt, dass Schwindungsdifferenzen nach dem Glattbrand im Vergleich zur originalen Porzellanpressmasse 111905, d.h. ohne Anteil rezyklierter Masse, größer ausfielen.

### Beispiel 4: Rückführung von Pressmasseabfällen zu Pressmasse

Bei der Rückführung von Pressmassenabfällen, die bei Herstellung von Porzellan-Flachgeschirr anfielen, konnten bis zu 20 Gew.-% Pressmasseabfälle der zur Produktion eingesetzten erfindungsgemäßen Pressmasse rückgeführt werden. Bei den erfmdungsgemäßen Pressmassen gemäß Beispiel 2 konnte gezeigt werden, dass bei einem Recyclinganteil von größer 20 Gew.-% die Rückführung möglich war, jedoch die Schwindung der Pressmasse für Produktionszwecke zu stark von der Schwindung der Pressmasse 111905 abwich. Bei Verwendung unveränderter Presswerkzeuge würden daher geringere Größen von beispielsweise Tellern resultieren. Bei einem Anteil von bis zu ca. 10 Gew.-% rückgeführter Pressmassenabfälle waren die Schwindungsdifferenzen gegenüber der Pressmasse 111910 für die erfindungsgemäßen Pressmassen innerhalb der akzeptablen Toleranzen. Dabei hat sich gezeigt, dass die Rückführung von Pressmassenabfällen dann zu einem höheren Anteil in die Pressmasse möglich ist, wenn nur ein sehr geringer Anteil organischen Bindemittels vorliegt, vorzugsweise nur Natriumpolyphosphat als Bindemittel vorliegt, ohne zusätzliche organische Bindemittel.

## Patentansprüche

1. Verfahren zur Herstellung von Geschirrkeramik mit dem Schritt der Pressung von granulatförmiger Masse, die aus Keramikschlicker herstellbar ist, **gekennzeichnet durch** die Rezyklierung von ungebrannter Masse und **durch** einen Gehalt der Masse an Polyphosphat.

2. Verfahren nach Anspruch 1, **dadurch gekennzeichnet, dass** die Masse durch Sprühtrocknung thermisch behandelt wird.

3. Verfahren nach Anspruch 1 oder 2, **dadurch gekennzeichnet, dass** die Rezyklierung Pressrückstände und Formlinge umfasst.

4. Verfahren nach einem der vorangehenden Ansprüche, **dadurch gekennzeichnet, dass** das Polyphosphat Natrium-, Kalium-, Calcium- und/oder Magnesium- Tri- bis Heptametaphosphat im Bereich von 0,1 - 5 Gew.-% ist.

5. Verfahren nach einem der vorangehenden Ansprüche, **dadurch gekennzeichnet, dass** die Masse
a) 40 - 50 Gew.-% Kaolin, 30 - 40 Gew.-% Quarz und 10 - 30 Gew.-% Feldspat zur Herstellung von Vitreous China enthält oder
b) 50 - 60 Gew.-% Kaolin, 20 - 30 Gew.-% Quarz und 20 - 35 Gew.-% Feldspat zur Herstellung von Hartporzellan enthält.

6. Verfahren nach einem der vorangehenden Ansprüche, **dadurch gekennzeichnet, dass** die Masse zusätzlich 0,5 - 5 Gew.-% hochplastischen Rohstoffs enthält, der aus der Gruppe ausgewählt ist, die Kaolin, Ton, Bentonit und Mischungen dieser umfasst.

7. Verfahren nach einem der vorangehenden Ansprüche, **dadurch gekennzeichnet, dass** die Rezyklierung einen Anteil von bis zu 20 Gew.-% am Keramikschlicker ausmacht.

8. Masse zur Herstellung von Geschirrkeramik, **gekennzeichnet dadurch, dass** die Masse für ein Verfahren nach einem der vorangehenden Ansprüche geeignet ist.

9. Masse nach Anspruch 8, **gekennzeichnet durch** einen Anteil an ungebrannter rezyklierter Masse, die einen Gehalt an Polyphosphat aufweist.

10. Masse nach Anspruch 8 oder 9, **dadurch gekennzeichnet, dass** das Polyphosphat Natrium-, Kalium-, Calcium- und/oder Magnesium- Tri- bis Heptametaphosphat im Bereich von 0,1 - 5 Gew.-% ist.

11. Masse nach einem der Ansprüche 8 bis 10, **dadurch gekennzeichnet, dass** die Masse
a) 40 - 50 Gew.-% Kaolin, 30 - 40 Gew.-% Quarz und 10 - 30 Gew.-% Feldspat zur Herstellung von Vitreous China enthält oder
b) 50 - 60 Gew.-% Kaolin, 20 - 30 Gew.-% Quarz und 20 - 35 Gew.-% Feldspat zur Herstellung von Hartporzellan enthält.

12. Masse nach einem der Ansprüche 8 bis 11, **dadurch gekennzeichnet, dass** die Masse zusätzlich 0,5 - 5 Gew.-% hochplastischen Rohstoffs enthält, der aus der Gruppe ausgewählt ist, die Kaolin, Ton, Bentonit und Mischungen dieser umfasst.

13. Verwendung von Polyphosphat in einem Verfahren nach einem der Ansprüche 1 bis 7 oder in einer Masse nach einem der Ansprüche 8 bis 12.

14. Verwendung von Masse zur Herstellung von Geschirrkeramik mit dem Schritt der Pressung von granulatförmiger Masse, die aus Keramikschlicker herstellbar ist, **dadurch gekennzeichnet, dass** die Masse einen Gehalt an Polyphosphat aufweist und ungebrannt rezyklierbar ist.

15. Verwendung nach Anspruch 14, **dadurch gekennzeichnet, dass** das Polyphosphat Natrium-, Kalium-, Calcium- und/oder Magnesium- Tri- bis Heptametaphosphat im Bereich von 0,1 - 5 Gew.-% ist.

16. Verwendung nach Anspruch 14 oder 15, **dadurch gekennzeichnet, dass** die Masse
a) 40 - 50 Gew.-% Kaolin, 30 - 40 Gew.-% Quarz und 10 - 30 Gew.-% Feldspat zur Herstellung von Vitreous China enthält oder
b) 50 - 60 Gew.-% Kaolin, 20 - 30 Gew.-% Quarz und 20 - 35 Gew.-% Feldspat zur Herstellung von Hartporzellan enthält.

17. Verwendung nach einem der Ansprüche 14 bis 16, **dadurch gekennzeichnet, dass** die Masse zusätzlich 0,5 - 5 Gew.-% hochplastischen Rohstoffs enthält, der aus der Gruppe ausgewählt ist, die Kaolin, Ton, Bentonit und Mischungen dieser umfasst.
